Europäisches Patentamt

European Patent Office

Office européen des brevets

(11) Publication number: **0 219 215**
A2

(12) **EUROPEAN PATENT APPLICATION**

(21) Application number: **86306722.9**

(22) Date of filing: **29.08.86**

(51) Int. Cl.⁴: **G 01 F 15/06**

(30) Priority: **30.08.85 GB 8521668**

(43) Date of publication of application:
**22.04.87 Bulletin 87/17**

(84) Designated Contracting States:
**DE FR IT**

(71) Applicant: **J.E. MATHER & SONS LTD.**
**Barchester Winery**
**Silver Royd Hill Leeds LS12 4JL(GB)**

(72) Inventor: **Grayson, A.B.**
**Barchester Winery Silver Royd Hill**
**Leeds LS12 4JL(GB)**

(74) Representative: **Gibson, Stewart Harry et al,**
**Urquhart-Dykes & Lord Midsummer House 419B**
**Midsummer Boulevard**
**Central Milton Keynes, MK9 3BN(GB)**

(54) **Flow monitoring system.**

(57) In a liquid processing plant, for example a wine making plant, a flow monitoring system is provided and comprises flowmeters 26 in the flowlines between different tanks (e.g. fermentation, fortifying and storage tanks 10, 12, 16), the flowmeters providing electrical signals over lines 29 to a centrally-located computer which monitors these signals and records the volumes of liquid moved between tanks. The computer also serves to record the volume of liquid which is moved from the storage tanks to a section 18 where the wine is finally processed and bottled, and on which recorded volumes customs duty is paid.

Croydon Printing Company Ltd

- 1 -

# FLOW MONITORING SYSTEM

This invention relates to a computer system for monitoring the flow of liquids or fluids. The system has particular utility for a wine making plant (or winery) but has utility generally in plants where liquids or fluids flow between various tanks or containers, for example oil refineries or other types of processing or refining plants.

With particular reference to wine making plants, the liquid is transferred through a succession of tanks for its successive stages of processing, spending time for processing or storage in each stage. Eventually, the liquid is moved into a final section where it is made ready for bottling and undergoes processes such as blending, filtering and colouring: excise duty is paid on the liquid which passes into this final section, which is accordingly called the duty-paid section. Hitherto in order to determine the volume of liquid held in any particular tank, and then to determine the volume of liquid transferred from one tank to another when a movement is carried out, direct measurements of the depth of liquid in the tanks have been made, using dip sticks. Notes of these measurements have been made and then taken to a central office where the various volumes and volume transfers have been written into ledgers. From these records the amount of duty payable has been calculated. These measuring and recording processes have however been time consuming and prone to inaccuracies and sometimes error.

We have now devised a computer system for automatically monitoring the flow of liquids or fluids in a winery or other plant and enabling an accurate record to be kept of the flow of liquids or fluids between various containers of the plant.

Thus, in accordance with this invention, there is provided a flow monitoring system comprising a flowmeter connected or connectable into the flowline between each successive pair of tanks or containers in the plant to be monitored, each flowmeter providing an electrical output representing the flow rate, and a centrally-located computer to which the flowmeter electrical outputs are coupled, the computer serving to monitor the flowmeter electrical outputs and record the volumes of liquid which are moved between each pair of tanks or containers.

Preferably the flowmeters are turbine-type flowmeters which produce pulses at a rate proportional to the speed of rotation of the turbine, which in turn is related to the flow rate of liquid through the meter. An interface is then located adjacent each flowmeter and serves to square-up the pulses from the meter, for transmission over a cable to the centrally-located computer. Adjacent the computer, interface circuits are provided, one for each flowmeter, for receiving the pulses from the respective flowmeters and counting these. The computer poles these interface circuits in turn to read the pulses counted per unit time and thus determine the volume of liquid which has been moved.

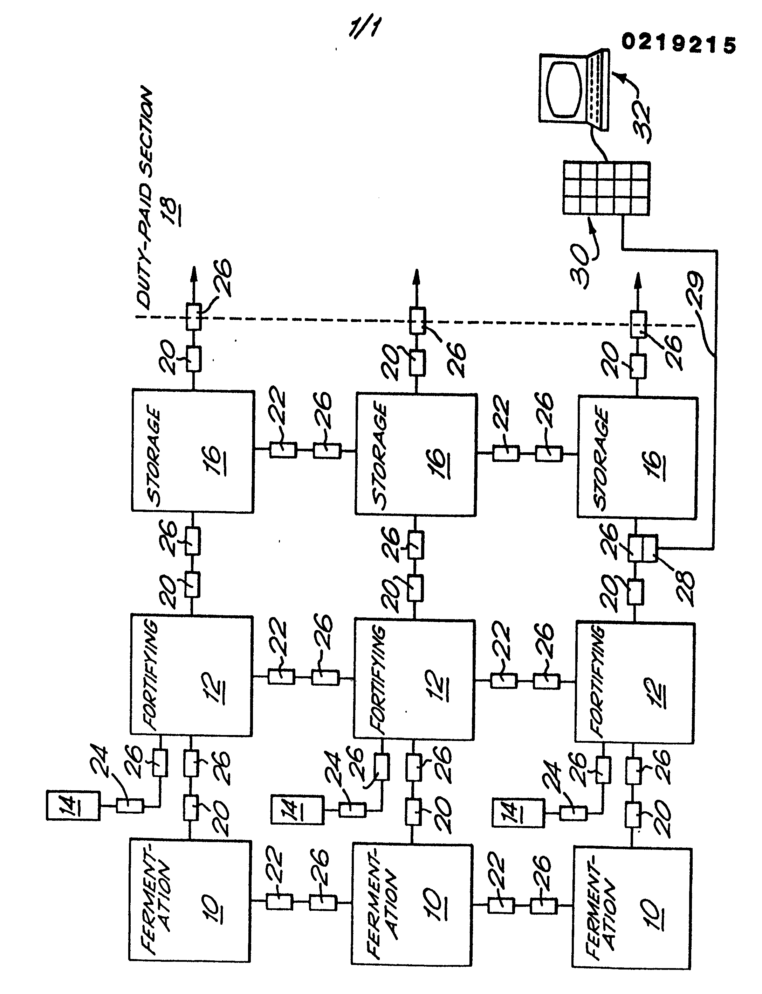

An embodiment of this invention will now be described by way of example only and with reference to the accompanying drawing, the single figure of which is a schematic diagram of a wine making plant having a computer system for monitoring the flow of liquid.

The wine making plant or winery illustrated comprises a number of large tanks or containers through which the liquid passes, spending time in each successive tank for processing or storage. In the example shown, there are a number of fermentation tanks 10. After the fermentation process is completed, the liquid passes to fortifying tanks 12, again a number of these tanks being shown: whilst in these tanks, spirits are added from supply containers 14. After the fortifying process, the liquid passes into storage and a number of storage tanks 16 are shown. When the liquid is required for final processing and making-ready for bottling, it is passed from the storage tanks and into the duty-paid section 18 where (as mentioned before) it undergoes blending, filtering and colouring before finally being bottled.

Pumps 20 serve to pump the liquid from one tank to another, starting from the fermentation tanks and ending in the duty-paid section. Sometimes it is required to transfer liquid from one fermentation tank to another, or from one fortifying tank to another, or from one storage tank to another, and pumps 22 serve for this purpose. Pumps 24 are provided for passing spirits or other additives into the fortifying tanks from the supply containers.

A flowmeter 26 is connected in series with each of the pumps 20,22,24 to measure the flow of liquid between each pair of tanks. Each flowmeter is of the turbine type, generating pulses at a rate proportional to the speed of rotation of its turbine (which in turn is related to the rate of flow of liquid through the flowmeter). An interface 28 is located adjacent each flowmeter (only one such interface being shown) and serves to square-up the pulse generated: this pulse-train output is transmitted over a cable 29 to a respective interface circuit 30, in a bank of such circuits, adjacent a centrally-located microcomputer 32. Each interface circuit 30 receives the pulses from its respective flowmeter and counts these: the microcomputer poles the interface circuits in turn and, for each circuit, if the count has altered since the previous time that circuit was poled, will read the new count. From this the microcomputer monitors for any movements of liquid, measures the amount of liquid flowing in each movement, and records in its memory the total amount of liquid transferred in each such movement. Any of this recorded information can be recalled to the VDU of the computer when required and the memory can hold information for all the movements of liquid which have taken place for up to about 12 months.

The movements of liquid are effected by the respective pumps and these are controlled manually. The microcomputer will detect when any movement has been initiated, and will then give an indication on its VDU that such a new movement has been initiated, together with identification of the tanks between which the movement is taking place. The microcomputer will further indicate on its VDU when that particular movement has finished and how much liquid has been transferred.

In a development of the system described, the pumps may be controlled by the microcomputer, so that the computer user can set up via the keyboard instructions for carrying out the movements of liquid, whereafter the computer will start up the relevant pump, then automatically shut down that pump after the specified amount of liquid has been transferred (as measured by the relevant flowmeter).

In the example shown, the flowmeter on the lines into the duty-paid section are required to be particulary accurate, because it is primarily on the volume of liquid passing through these lines that the duty to be paid is calculated. These particular flowmeters are also of the turbine type but have a second turbine impeller, in line with the primary impeller, and pulses generated from the second impeller are correlated with those from the primary impeller to overcome effects of turbulence and enhance the accuracy of the flowmeter. Each of these flowmeters is sufficiently accurate over a predetermined range of flow-rates: if the monitored flow rate is outside this range then the computer issues a signal causing the electrical power to the associated pump to be cut-out. The system then requires resetting manually.

The system which has been described operates automatically and continuously to monitor and record all movements of liquid. From this, information is available from the computer memory as to the volume of liquid which has been moved between given tanks in any given period of time, and in particular from the storage tanks and into th duty-paid section. The system can also provide information as to the amount of different spirits or additives supplied from containers 14 in a given period of time, and this provides a means of stock control.

## CLAIMS:

1. In or for a liquid or fluid processing plant having a plurality of tanks or containers and a flowline interconnecting different pairs of tanks or containers, a flow monitoring system comprising a flowmeter connected or connectable in the flowline between each pair of tanks or containers, each flowmeter providing an electrical output representing the flow rate of liquid or fluid along the respective flowline, and a central computer to which the flowmeter electrical outputs are coupled, the computer serving to monitor the flowmeter electrical outputs and record the volumes of liquid or fluid which are moved between each pair of tanks or containers.

2. A flow monitoring system as claimed in claim 1, in which the computer serves to monitor the flowmeters in turn and, in response to detecting flow through any flowline, serves to provide an indication of the tanks or containers between which the flow is taking place.

3. A flow monitoring system as claimed in claim 2, in which the computer further serves to provide an indication when the detected flow has finished together with an indication of the volume of flow which has taken place.

4. A flow monitoring system as claimed in any preceding claim, in which any of the information recorded by the computer can be recalled to a visual display unit of the computer when required.

5. A flow monitoring system as claimed in any preceding claim, in which the computer is arranged to control pumps connected in series in the flowlines whereby instructions for the movement of liquid or fluid may be set up on a keyboard of the computer and the computer will automatically start up the relevant pump and subsequently shut it down after a specified volume of liquid or fluid has been transferred (as measured by the relevant flowmeter).

6.   A flow monitoring system as claimed in any preceding claim, in which at least one of the flowmeters is monitored by the computer in case it indicates a flow rate outside a predetermined range, in response to which the computer terminates the respective flow of liquid or fluid.

7.   A flow monitoring system as claimed in any preceding claim, in which the flowmeters are turbine-type flowmeters which produce an electrical pulse at a rate proportional to the speed of rotation of the turbine impeller, and an interface is located adjacent each flowmeter serving to square-up the pulser from the flowmeter, for transmission over a cable to the computer.

8.   A flow monitoring system as claimed in claim 7, further comprising a bank of interface circuits adjacent the computer, one for each of the flowmeter interface circuits and serving to receive the electrical pulses from the respective flowmeters and count these pulses.

9.   A flow monitoring system as claimed in claim 8, in which the computer is arranged to pole the interface circuits (of the adjacent bank of such circuits) in turn in order to read the pulses counted per unit of time and thus determine the volume of liquid or fluid which has been moved.

10.   A flow monitoring system as claimed in claim 7, 8 or 9, in which at least one flowmeter has a second

0219215

turbine impeller in line with the primary impeller together with means for correlating electrical pulses generated in response to rotation of the second impeller with the pulses generated in response to rotation of the primary impeller, to overcome effects of turbulence.

11. A wine making plant comprising a plurality of tanks, including fermentation, fortifying and storage tanks, flowlines extending between the fermentation and fortifying tanks and between the fortifying and storage tanks, and including a flow monitoring system as claimed in any preceding claim.